# EUROPÄISCHE PATENTANMELDUNG

(11) **EP 3 824 736 A1**
(43) Veröffentlichungstag der Anmeldung: **26.05.2021**
(21) Anmeldenummer: 20209688.9
(22) Anmeldetag: 25.11.2020
(51) Int. Cl.: A23F 5/16, A23F 5/02

(54) **VERFAHREN ZUM BEREITSTELLEN VON KAFFEEBOHNEN, DIE NACH DER RÖSTUNG WENIGER ACRYLAMID ENTHALTEN, SOWIE KAFFEEBOHNEN, DIE GEMÄSS DIESEM VERFAHREN HERGESTELLT WURDEN**

(30) Priorität: 25.11.2019 DE 102019218198
(71) Anmelder: SternEnzym GmbH & Co. KG, 22926 Ahrensburg (DE)
(72) Erfinder: POPPER, Lutz, 22527 Hamberg (DE)
(74) Vertreter: Grünecker Patent- und Rechtsanwälte PartG mbB

(57) **Zusammenfassung**

Die vorliegende Erfindung betrifft ein Verfahren zum Behandeln von Kaffeebohnen, insbesondere zum Bereitstellen von Kaffeebohnen, die nach der Röstung im Vergleich zu unbehandelten Kaffeebohnen weniger Acrylamid enthalten. Die vorliegende Erfindung betrifft ferner eine Kaffeebohne, die gemäß dem erfindungsgemäßen Verfahren hergestellt wurde. Das erfindungsgemäße Verfahren zum Behandeln von Kaffeebohnen umfasst die folgenden Schritte: Behandeln der ungerösteten Kaffeebohnen mit einem elektrischen Feld und In-Kontakt-Bringen der ungerösteten Kaffeebohnen mit einem Reagenz, das den Gehalt von Asparagin und/oder reduzierendem Zucker in der ungerösteten Bohne reduziert.

## Beschreibung

Die vorliegende Erfindung betrifft ein Verfahren zum Behandeln von Kaffeebohnen, insbesondere zum Bereitstellen von Kaffeebohnen, die nach der Röstung im Vergleich zu unbehandelten Kaffeebohnen weniger Acrylamid enthalten. Die vorliegende Erfindung betrifft ferner eine Kaffeebohne, die gemäß dem erfindungsgemäßen Verfahren hergestellt wurde.

Kaffee ist ein schwarzes, psychotropes, koffeinhaltiges Heißgetränk, das aus gerösteten und gemahlenen Kaffeebohnen, den Samen der Frucht der Kaffeepflanze, und heißem Wasser hergestellt wird. Die Früchte der Kaffeepflanze sind rote, kirschenähnliche Steinfrüchte mit meist zwei Steinkernen. Diese Steinkerne sind die eigentlichen Kaffeebohnen. Die roten, kirschenähnlichen Früchte werden auch Kaffeebeeren oder Kaffeekirschen genannt.

Acrylamid ist ein Stoff, der als unerwünschtes Nebenprodukt bei der Erhitzung von kohlehydratreichen Lebensmitteln entsteht und der in hoher Dosierung das Risiko einer Entwicklung von Erbgutveränderungen und Tumoren birgt. Acrylamid wird daher als erbgutschädigend und krebserregend eingestuft. Typischerweise kommt es zur Acrylamidbildung bei der sogenannten Bräunungsreaktion, die bei Röst-, Back-, Brat- und Frittiervorgängen stattfindet. Zu den größten Acrylamidquellen gehören daher gebratene bzw. frittierte Kartoffelerzeugnisse, aber auch Kaffee und Toastbrot.

Es ist somit wünschenswert, den Gehalt von Acrylamid in gerösteten Kaffeebohnen zu senken.

Es ist bekannt, beispielsweise aus der WO 2004/037007 A2, den Gehalt an Acrylamid durch die Zugabe von Enzymen wie beispielsweise Asparaginasen zu reduzieren, welche den Gehalt von Asparagin, welches im Rahmen einer Maillard-Reaktion in Acrylamid umgewandelt wird, herabzusetzen.

Aus der WO 2008/179749 A1 ist beispielsweise bekannt, Kartoffeln enzymatisch mit Asparaginase zu behandeln, nachdem eine Vorbehandlung mit einem elektrischen Feld durchgeführt wurde. Aus der WO 2011/110213 A1 ist bekannt, geschnittene Zichorienstücke mit einem elektrischen Feld vorzubehandeln und anschließend einer Behandlungsflüssigkeit auszusetzen.

Die Aufgabe der vorliegenden Erfindung ist somit, ein Verfahren bereitzustellen, mit dem der Acrylamidgehalt in gerösteten Kaffeebohnen reduziert werden kann.

Erfindungsgemäß wird diese Aufgabe gelöst durch ein Verfahren zum Behandeln von Kaffeebohnen, insbesondere zum Bereitstellen von Kaffeebohnen, die nach der Röstung im Vergleich zu unbehandelten Kaffeebohnen weniger Acrylamid aufweisen, umfassend die folgenden Schritte:
- Behandeln der Kaffeebohnen mit einem elektrischen Feld, und
- In-Kontakt-Bringen der Kaffeebohnen mit einem Reagenz, das den Gehalt von reduzierenden Zuckern und/oder Asparagin in der ungerösteten Bohne reduziert.

Es hat sich überraschenderweise gezeigt, dass die Behandlung der Bohnen mittels elektrischem Feld die Effektivität des Reagenzes so stark begünstig, dass der Gehalt an intrazellulären reduzierenden Zuckern und/oder Asparagin, die beide als Edukte/Präkursoren an der Ausbildung von Acrylamid während des Röstens beteiligt sind, signifikant gesenkt werden kann. Dies ist insofern überraschend, als Kaffeebohnen, insbesondere ungemahlene Kaffeebohnen, wie grüne Kaffeebohnen, nur schwer penetrierbar sind. Reagenzien wirken oft nur oberflächlich an diesen Kaffeebohnen. Die Verbesserung der Penetration von Kaffeebohnen durch mechanische Methoden wie Zerkleinern, Aufbohren oder Verursachen von Brüchen in der Struktur der Bohne führt zu unerwünschten Materialverlusten. Mechanische Methoden sind insbesondere bei ungerösteten Kaffeebohnen aufgrund des anschließenden Röstprozesses allerdings nicht möglich. Eine thermische Behandlung der Kaffeebohnen führt zu einer unerwünschten Quellung der Inhaltsstoffe und zu Aromaverlusten. Überraschenderweise treten diese negativen Nebenwirkungen bei der Behandlung mit einem elektrischen Feld nicht auf. Das erfindungsgemäße Verfahren stellt somit eine Möglichkeit bereit, den Acrylamidgehalt in gerösteten Kaffeebohnen bzw. den Gehalt an reduzierenden Zuckern und/oder Asparagin in den ungerösteten Bohnen erheblich zu senken und den Kaffee auf diese Weise anwenderfreundlich und weniger gesundheitsgefährdend bereitzustellen. Wurzel- und Knollengemüse wie Kartoffeln oder den Wurzeln der Zichorie, die im Stand der Technik, z.B. der WO 2011/110213 A1 vor der Benutzung mit einem elektrischen Feld zerkleinert wurden, weisen im Unterschied zur Kaffeebohne ein weiches Gewebe mit hohem Wassergehalt auf. Im Unterschied dazu besitzen Kaffeebohnen einen nur geringen Wassergehalt und eine harte Struktur. Es überrascht daher, dass das Behandeln mit einem elektrischen Feld bei Kaffeebohnen überhaupt einen Effekt erzielt. Es war nicht zu erwarten, dass Kaffeebohnen mit dem erfindungsgemäßen Verfahren sich ausreichend permabilisieren lassen, um ein effektives Migrieren von Einzelmolekülen zu erlauben.

Unter dem Bereitstellen von gerösteten Kaffeebohnen mit weniger Acrylamid im Vergleich zu unbehandelten Kaffeebohnen ist zu verstehen, dass die erfindungsgemäß behandelten und anschließend gerösteten Kaffeebohnen im Vergleich zu entsprechenden gerösteten Kaffeebohnen, die nicht den Schritten des erfindungsgemäßen Verfahrens ausgesetzt wurden, einen geringeren Acrylamidgehalt aufweisen. Die erfindungsgemäßen ungerösteten Kaffeebohnen weisen im Vergleich zu unbehandelten Kaffeebohnen, die entsprechend, aber ohne die erfindungsgemäßen Schritte produziert wurden, weniger intrazelluläre reduzierende Zucker und/oder weniger Asparagin auf. Verfahren zur Bestimmung des Acrylamidsäuregehalts bzw. des Gehaltes an reduzierenden Zuckern und Asparaginsäure, beispielsweise mittels Chromatographie, sind bekannt.

Die Erfindung kann mit den folgenden, jeweils für sich vorteilhaften und beliebig miteinander kombinierbaren Weiterentwicklungen und vorteilhaften Ausgestaltungen weiter verbessert werden.

Gemäß einem Ausführungsbeispiel kann das Reagenz Asparagin in der Kaffeebohne spalten und in einen Stoff umsetzen, der zu keiner Acrylamidbildung führt. Gemäß einem anderen Ausführungsbeispiel kann das Reagenz mit einem reduzierenden Zucker, beispielsweise Glukose, Fruktose, Galaktose, Maltose, Laktose reagieren und den reduzierenden Zucker in einen Stoff umsetzen, der im Röstprozess zu keiner Acrylamidbildung führt. Als reduzierende Zucker werden Mono-, Di- oder Oligosaccharide bezeichnet, deren Moleküle freie Aldehydgruppen besitzen. In einer anderen Ausführungsform kann das Reagenz ein Extraktionsmittel sein, welches Asparagin und/oder reduzierende Zucker aus den Kaffeebohnen herauszieht, also extrahiert. Dies kann beispielsweise eine wässrige Lösung sein. Selbstverständlich können die angeführten Ausführungsformen des Reagenzes beliebig miteinander kombiniert werden. So kann beispielsweise das Reagenz eine wässrige Lösung als Extraktionsmittel sein, welches zusätzlich eine mit Asparagin und/oder mit einem reduzierenden Zucker reagierende Substanz enthält. Auf diese Weise erreicht man, dass die an der Acrylamidbildung beim Rösten beteiligten Edukte, Asparagin und reduzierende Zucker, aus den Kaffeebohnen herausgelöst oder durch Eindringen einer reagierenden Substanz, welche mit Asparagin und/oder reduzierenden Zuckern reagiert, in den Kaffeebohnen chemisch umsetzt. In beiden Fällen wird der Gehalt der Acrylamidedukte in der ungerösteten Kaffeebohne herabgesetzt und der beim Rösten erhaltene Acrylamidgehalt signifikant abgesenkt.

Das Reagenz, welches mit den ungerösteten Kaffeebohnen in Kontakt gebracht wird, kann eine Asparaginase (EC 3.5.1.1) sein. Asparaginasen sind Enzyme, welche die Hydrolyse von Asparagin zu Asparaginsäure katalysieren. In einer anderen Ausführungsform kann das Reagenz eine Oxidoreduktase, beispielsweise eine Oxidase oder Dehydrogenase umfassen, welche mit einem reduzierenden Zucker als Substrat reagiert und chemisch in einen Stoff (zum Beispiel eine Zuckersäure oder ein Lakton) umwandelt, der nicht an einer Acrylamidbildung beteiligt ist. Beispiele für Oxidasen sind Glukose-Oxidase (EC 1.1.3.4), Pyranose-Oxidase, Hexose-Oxidase (EC 1.1.3.5), Galaktose-Oxidase (EC 1.1.3.9), also Enzyme, welche die Oxidation der reduzierenden Zucker zu ihrer entsprechenden Säure durch den Sauerstoff der Umgebung katalysieren. Beispiele für eine Dehydrogenase sind Glukose-Dehydrogenase (z.B. EC 1.1.4.7oder EC 1.1.99.10), Galaktose-Dehydrogenase (EC 1.1.1.48), D-Aldohexose-Dehydrogenase (EC 1.1.1.118 oder 1.1.1.119), Fruktose-Dehydrogenase, Aldehyd-Dehydrogenase, oder eine Glukose-Fruktose-Oxidoreduktase. Jedes dieser Enzyme ist dazu in der Lage, den reduzierenden Zucker bzw. Asparagin effektiv chemisch so umzusetzen, dass die Produkte der katalysierten Reaktion zu keiner Acrylamidbildung bei der Röstung führen.

Ferner kann das Reagenz ein oder mehrere Enzyme enthalten, die die Spaltung von Saccharose in Glucose und Fructose sowie mit den o.g. Enzymen deren abschließenden Umbau in nicht-Acrylamid-bildende Moleküle beschleunigen, insbesondere Invertase (EC 3.2.1.26) und Fructose-Isomerase (z.B. EC 5.3.1.5 oder EC 5.3.1.9).

Eine weitere Option ist die Entfernung von Saccharose durch Glycosyl-Transferasen (EC 2.4.1, z.B. EC 2.4.1.125), die zur Bildung von Zucker-Oligomeren führen, die der Acrylamidbildenden Reaktion nicht mehr zur Verfügung stehen.

In einer Ausführungsform kann das Reagenz, welches mit den ungerösteten Kaffeebohnen in Kontakt gebracht wird, ein Mikroorganismus sein, der ein mit Asparagin und/oder einem reduzierenden Zucker reagierendes Enzym exprimiert, oder ein Lysat des Mikroorganismus umfassen. Das exprimierte Enzym kann eines der oben angeführten Enzyme sein. Auf diese Weise wird ein biologisches und für die Behandlung von Kaffeebohnen aus gesundheitlicher Sicht unbedenklich Reagenz eingesetzt, das effektiv Asparagin bzw. reduzierende Zucker in der Kaffeebohne chemisch so umsetzt, dass die Produkte zu keiner Acrylamidbildung führen. Der Mikroorganismus kann beispielsweise ausgewählt sein aus der Gruppe umfassend As*pergillus sp., Aspergillus oryzae, Aspergillus nidulans, Aspergillus niger, Aspergillus fumigatus, Erwinia sp., Erwinia chrysantemii, Saccharomyces sp., Saccharomyces cerevisae, Candida sp., Candida utilis, Escherichia sp., Escherichia coli, Fusarium sp., Fusarium graminearum, Penecilium sp., Penecilium citrinum,* die allesamt Asparaginase exprimieren können. Der Mikroorganismus kann ferner oder zusätzlich ausgewählt sein aus Algen der Spezies *Iridophycus, Chondrus und Euthora,* insbesondere *Iridophycus flaccidum, Chondrus crispus und Euthora christata,* die allesamt Hexose-Oxidase exprimieren. Ein anderer Mikroorganismus, der beispielsweise Pyranose-Oxidase exprimiert, ist von der Spezies *Basidiumycete, Peniophora, Aphyllophorales, Phanerochaete, Polyporus, Bierkandera* und *Phlebiopsis,* insbesondere Ba*sidiumycete fungi, Peniophora gigantean, Phanerochaete chrysosporium, Polyporus pinsitus, Bierkandera adusta* und *Phlebiopsis gigantean.* Weitere Altarnativen wären Mikroorganismen der Spezies *Microdochium* und *Acremonium,* beispielsweise *Microdochium nivale, Acremonium strictum, Acremonium fusidioidis* oder *Acremonium potronii.* Diese Mikroorganismen exprimieren beispielsweise eine Kohlenhydrat-Oxidase.

Das Reagenz zur chemischen Umwandlung von Asparagin bzw. reduzierendem Zucker kann in gelöster Form vorliegen, was den Schritt des In-Kontakt-Bringens begünstigt und gleichzeitig eine wässrige Lösung als Extraktionsmittel bereitstellt, das Asparagin und reduzierende Zucker aus den Zellen der Kaffeebohnen herauslöst und die Reaktion beschleunigt.

Der Schritt des In-Kontakt-Bringens kann erfolgen durch ein Einweichen der Kaffeebohnen in einer Lösung, die das Reagenz umfasst, oder durch oberflächliches Anfeuchten mit einer Flüssigkeit, die das Reagenz umfasst. Das Einweichen, bei dem die Kaffeebohnen in die Flüssigkeit eingelegt werden, kann die Penetration des Reagenzes begünstigen, da ein Einweichen die Kaffeebohnen in der Regel auch erweicht und somit für äußerliche Faktoren zugänglicher macht. Ein oberflächliches Anfeuchten ist ökonomischer und schneller durchzuführen. Es sind keine Stehzeiten wie beim Einweichen erforderlich und die Flüssigkeit wird lediglich oberflächlich auf die Kaffeebohnen appliziert.

Gemäß einer weiteren Ausführungsform des erfindungsgemäßen Verfahrens können die behandelten ungerösteten Kaffeebohnen grüne Bohnen oder die Steinkerne von ungetrockneten Kaffeebeeren sein. Unter ungeröstete Bohnen fallen die Kaffeebohnen in jedem Stadium vor der Röstung, von der Ernte der Kaffeebeeren bis zu den grünen Bohnen unmittelbar vor dem Röstprozess. Grüne Bohnen sind die aufbereiteten, getrockneten und gereinigten Kaffeebohnen vor der Röstung. Die Steinkerne von ungetrockneten Kaffeebeeren sind die Bohnen in einem Stadium zwischen der Ernte und deren Trocknung.

Beim Behandeln mit einem elektrischen Feld können die Kaffeebohnen elektroporiert werden, das heißt, die Zellmembran wird vorübergehend (reversibel) oder dauerhaft (irreversibel) permeabel. Das angelegte elektrische Feld kann einen kontrollierten Zellaufschluss bewirken, bei dem der Grad des Zellaufschlusses auf einen vorbestimmten Wert eingestellt wird. Beim Behandeln kann insbesondere ein gepulstes elektrisches Feld (PEF: Pulsed Electric Field) angelegt werden, was einen Zellaufschluss bewirkt. Das angelegte elektrische Feld kann insbesondere ein nicht-thermisch wirkendes elektrisches Feld sein, bei dem die Energieobergrenze so bemessen ist, dass im Wesentlichen keine Erwärmung der Kaffeebohnen im Sinne einer Ohmschen Erhitzung stattfindet. Die Aufhebung der Semipermeabilität und der damit verbundene Zellaufschluss verbessert den Massentransport sowohl von Asparagin und reduzierenden Zuckern aus den Bohnen als auch den Massentransport des Reagens in die Zellstrukturen und somit die Reaktion bzw. den Abbau der Acrylamidedukte. Diese Semipermeabilität der Zellmembran kann reversibel oder irreversibel aufgehoben werden. Eine irreversible Elektroporation ist vorteilhaft, weil sie die dauerhafte Aufhebung der Permeabilität und somit mehr Flexibilität bei der Abfolge der Verfahrensschritte lässt. Eine reversible Elektroporation ist insbesondere dann günstig, wenn die Schritte des Behandelns der Kaffeebohnen mit dem elektrischen Feld und das In-Kontakt-Bringen der Kaffeebohnen mit dem Reagens unmittelbar aufeinander folgen bzw. gleichzeitig durchgeführt werden.

Beim Behandeln mit einem elektrischen Feld kann ein Energieeintrag von wenigstens 0,1 kJ/kg, vorzugsweise von 1 kJ/kg in die Pflanzensamen erfolgen. Ein Energieeintrag in dieser Größenordnung ist gut geeignet, die Textur und Struktur der Kaffeebohnen zu beeinflussen und die Durchlässigkeit für das Reagens in die Zellen der Kaffeebohnen zu verbessem. Um den Energieeintrag zu optimieren und energetisch unnötige Behandlungen der Kaffeebohnen zu vermeiden, kann der Energieeintrag in die Kaffeebohnen ein 1 kJ/kg bis 50 kJ/kg vorzugsweise von 3 kJ/kg bis 8 kJ/kg in die Kaffeebohnen betragen.

Es hat sich als vorteilhaft erwiesen, wenn die Kaffeebohnen einem elektrischen Feld von 0,1 kV/cm bis 10 kV/cm, vorzugsweise von 0,5 kV/cm bis 4 kV/cm und besonders bevorzugt von 1 kV/cm bis 3 kV/cm ausgesetzt werden. Derartige Feldstärken lassen mit handelsüblichen industriellen Kondensatoren erzielen und vermeiden, dass unerwünschte thermische Effekte auftreten, die zu nicht beabsichtigten Veränderungen der Kaffeebohnen führen.

Besonders effektiv können Kaffeebohnen mittels elektrischer Pulse behandelt werden, um im Rahmen der vorliegenden Erfindung die Wirksamkeit des Reagens beim Abbau der Acrylamidedukte, also von Asparagin und/oder reduzierenden Zuckern zu verstärken. Dazu können die Kaffeebohnen in einer Anlage behandelt werden, die beispielsweise einen Kondensator mit wenigstens zwei Elektroden umfasst, die mit einem Impulsgenerator als Spannungsquelle verbunden sind. Das elektrische Feld, insbesondere die elektrischen Pulse, die damit erzeugt werden, können sowohl durch Direktkontakt der Elektroden des Kondensators mit den Kaffeebohnen, als auch überleitende Fluide erzeugt werden, wobei die Pflanzensamen ganz oder teilweise in die Fluide eingelegt werden bzw. mit diesen Fluiden vor Behandlung mit dem elektrischen Feld benetzt, also oberflächlich angefeuchtet werden. Es können verschiedene Elektrodenformen zur Anwendung kommen, beispielsweise Platten-, Ring-, Gitter-, Hohl- oder Durchflusselektroden, die auf verschiedenste Art, beispielsweise parallel, koaxial, kollinear, konisch oder als Ringspalt angeordnet sein können. Als Impulsgenerator kann ein Hochspannungsimpulsgenerator, beispielsweise ein Marx-Generator eingesetzt werden, der elektrische Felder in Form von kurzen Pulsen im Mikro- bis Millisekundenbereich einer hohen Spannung im Kilovoltbereich erzeugt. Derartige Hochspannungsimpulse bewirken bei den zu behandelnden Kaffeebohnen eine Elektroporation, was insbesondere eine Permeabilisierung der Zellmembran zur Folge hat und die Struktur und Textur der Kaffeebohnen auf besonders einfache und nicht-thermische Art und Weise vorteilhaft die bessere Wirksamkeit des eingesetzten Reagens beeinflusst.

Im Sinne einer Zeit- und Energieoptimierung, können die Kaffeebohnen mit wenigstens 10 elektrischen Pulsen, vorzugsweise 10 bis 200 elektrischen Pulsen und besonders bevorzugt 30 bis 50 elektrischen Pulsen behandelt werden.

Gemäß einer weiteren Ausführungsform des erfindungsgemäßen Verfahrens können die Kaffeebohnen mit einem elektrischen Feld behandelt werden, bevor die Kaffeebohnen mit dem Reagens in Kontakt gebracht werden. Sollte die Behandlung mit dem elektrischen Feld zu einer irreversiblen Elektroporation führen, kann der Schritt des In-Kontakt-Bringens an einer beliebigen Stelle der Aufbereitung der Kaffeebohnen im Anschluss an die Behandlung mit dem elektrischen Feld erfolgen. Es ist in diesem Fall somit beispielsweise möglich, zunächst weitere Zwischenschritte wie Reinigungs- oder Waschschritte bzw. ein Sortieren durchzuführen, bevor die zuvor mit dem elektrischen Feld behandelten, irreversibel elektroporierter Kaffeebohnen anschließend mit dem Reagens in Kontakt gebracht werden.

Es ist gemäß einer weiteren Ausführungsform möglich, die Kaffeebohnen mit dem elektrischen Feld zu behandeln, während sie mit dem Reagens in Kontakt gebracht werden. In diesem Fall finden die Verfahrensschritte des Behandelns der Kaffeebohnen mit einem elektrischen Feld und des In-Kontakt-Bringens der Kaffeebohnen mit dem Reagens gleichzeitig statt. Hier kann beispielsweise das Reagens in gelöster Form vorliegen und die Kaffeebohnen können beim Anlegen des elektrischen Feldes in das Fluid mit gelöstem Reagens eingelegt sein bzw. oberflächlich mit diesem Fluid befeuchtet worden sein.

Gemäß einer weiteren Ausführungsform können die Kaffeebohnen mit einem elektrischen Feld behandelt werden, nachdem die Kaffeebohnen getrocknet wurden und, falls für die Behandlung mit dem elektrischen Feld erforderlich, gegebenenfalls anschließend angefeuchtet wurden. Bei dieser Ausführungsform haben die Kaffeebohnen den Trocknungsschritt bereits vollzogen und liegen, je nach Aufbereitungsform und -grad, als getrocknete Kaffeebeere bei einer Trockenaufbereitung bzw. als getrockneter Pergamentkaffee bei einer Nassaufbereitung, oder als grüne Bohnen vor. Nachbehandlungsschritte der getrockneten Kaffeebeere bzw. des getrockneten Pergamentkaffees, beispielsweise eine Reinigung, ein Schälen bzw. ein Sortieren können ebenfalls bereits erfolgt, bevor die Kaffeebohnen mit dem elektrischen Feld behandelt werden und/oder mit dem Reagens in Kontakt gebracht werden.

Gemäß einer anderen Ausführungsform können die Kaffeebohnen mit einem elektrischen Feld behandelt werden, bevor die Kaffeebohnen getrocknet werden. Bei nassaufbereiteten Kaffeebeeren kann die Behandlung des elektrischen Feldes beispielsweise vor oder unmittelbar nach dem Schritt des Waschens und somit nach dem Entpulpen und Fermentieren erfolgen. Dieser Schritt ist insofern günstig, als die Kaffeebohne in diesem Stadium bereits gereinigt und die Pulpe entfernt bzw. Schleimstoffe ausgewaschen wurden, und die Kaffeebohnen in einem feuchten und für die Behandlung mit dem elektrischen Feld gut geeigneten Zustand befinden.

Die Kaffeebohnen können mit dem Reagens in Kontakt gebracht werden, beispielsweise nachdem die Pulpe von den Kaffeebohnen entfernt wurde. Das Entfernen der Pulpe erleichtert das Eindringen des Reagens in die Kaffeebohnen, insbesondere deren Zellen und verbessert somit die Extraktion und/oder Reaktion von Asparagin und/oder reduzierenden Zuckern.

Die Kaffeebohnen können insbesondere mit dem Reagens in Kontakt gebracht werden, nachdem die Kaffeebohnen fermentiert und gewaschen wurden. In diesem Stadium ist bei nass aufbereiteten Kaffeebohnen bereits der Großteil der zu entfernenden Pulpe und Schleimstoffe von den zu behandelnden Kaffeebohnen abgetrennt.

Besonders bevorzugt können die Kaffeebohnen mit dem Reagens in Kontakt gebracht werden, nachdem die Kaffeebohnen getrocknet und geschält wurden. In diesem Stadium liegen im Wesentlichen grüne Kaffeebohnen vor, die gegebenenfalls noch nach Größe, Dichte und/oder Farbe sortiert werden bzw. bereits sortiert worden sind.

Mit Hilfe des erfindungsgemäßen Verfahrens ist es möglich, erfindungsgemäße geröstete Kaffeebohnen bereitzustellen, die einen Acrylamidgehalt von weniger als 200 µg/kg, vorzugsweise von weniger als 100 µg/kg und besonders bevorzugt weniger als 50 µg/kg aufweisen.

Dies liegt deutlich unter den durchschnittlichen Gehalten von 250-350 µg/kg unbehandelter gerösteter Kaffeebohnen. Die erfindungsgemäße Kaffeebohne kann auch eine ungeröstete Kaffeebohne, vorzugsweise eine grüne Kaffeebohne oder der Steinkern einer ungetrockneten Kaffeebeere sein, die mit dem erfindungsgemäßen Verfahren hergestellt wurde. Diese ungeröstete Bohne kann weniger als 0,4 g/kg, vorzugsweise weniger als 0,1 g/kg Asparagin und/oder weniger als 40 g/kg, vorzugsweise weniger als 10 g/kg Mono- und Disaccharide enthalten, was deutlich unter dem entsprechenden Gehalt unbehandelter, ungerösteter Kaffeebohnen von 0,5 g/kg Asparagin bzw. 60 g/kg Mono- und Disaccharide liegt.

Im Folgenden wird die Erfindung anhand vorteilhafter Ausgestaltungen mit Bezug auf die Zeichnungen beispielhaft näher erläutert. Die dabei dargestellten vorteilhaften Weiterentwicklungen und Ausgestaltungen sind jeweils voneinander unabhängig und können beliebig miteinander kombiniert werden, je nachdem, wie es im Anwendungsfall notwendig ist.

Es zeigen:
- Fig. 1: ein Fließschema der üblichen Verfahrensschritte bei der Aufbereitung der geernteten Kaffeebeeren bis zum Stadium der grünen, ungerösteten Kaffeebohnen;
- Fig. 2: eine erste beispielhafte Ausführungsform des erfindungsgemäßen Verfahrens;
- Fig. 3: eine weitere beispielhafte Ausführungsform des erfindungsgemäßen Verfahrens; und
- Fig. 4: eine dritte beispielhafte Ausführungsform des erfindungsgemäßen Verfahrens.

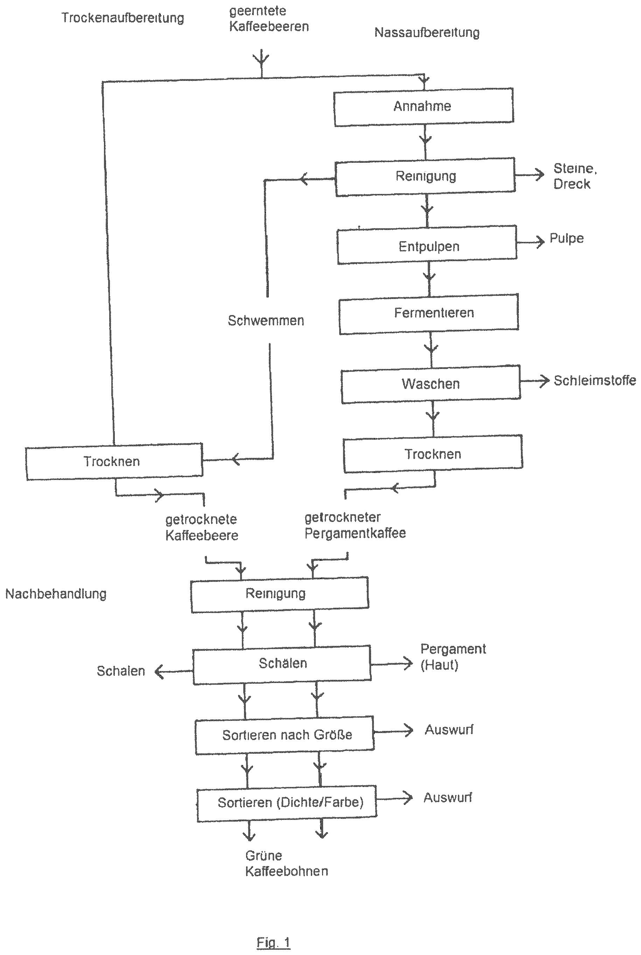

Nachfolgend wird unter Bezugnahme auf Fig. 1 die Aufbereitung der geernteten Kaffeebeere bis zum Stadium der grünen, ungerösteten Kaffeebohnen beschrieben. Kaffeebohnen werden einmal im Jahr, in einigen Anbaugebieten auch zweimal jährlich geerntet. Es gibt grundsätzlich zwei Arten, reife Kaffeebeeren (auch Kaffeekirschen genannt) zu ernten. Bei der "Picking-Methode" werden die reifen Kaffeebeeren von Hand gepflückt. Bei der "Stripping-Methode" werden alle Beeren, unabhängig von ihrem Reifegrad, entweder von Hand oder mit Maschinen abgestreift und gegebenenfalls nachsortiert.

Bei der Aufbereitung der Kaffeebohne werden die Fruchthaut, das Fruchtfleisch (auch Pulpe genannt), der der auf dem Pergamenthäutchen befindliche Schleim, das Pergamenthäutchen und, soweit wie möglich, auch das Silberhäutchen entfernt. Das kann auf trockenem Weg (Trockenaufbereitung) oder auf nassem Wege (Nassaufbereitung) erfolgen.

Bei der Trockenaufbereitung werden die geernteten Kaffeebeeren direkt getrocknet. Erst im Rahmen der Nachbehandlung wird von den getrockneten Kaffeebeeren die trockene Fruchthaut und das trockene Fruchtfleisch mechanisch abgeschält.

Bei der Nassaufbereitung werden die geernteten Kaffeebeeren nach Annahme zunächst mit Wasser vorgereinigt, um Dreck, Steine etc. zu entfernen und gegebenenfalls durch Schwemmen vorsortiert.

Anschließend wird in einem "Entpulper" die Fruchthaut und die Pulpe abgequetscht.

Die entpulpten Kaffeebeeren werden dann in einen Fermentationsbehälter überführt. Dort findet eine Fermentation (Gärung) statt, bei welcher sich der nach wie vor den Kaffeebohnen anhaftende Schleim verflüssigt und damit abwaschbar wird.

Nach der Fermentation werden die Kaffeebohnen gewaschen, um den verflüssigten Schleim zu entfernen und anschließend getrocknet. Den im Rahmen einer Nassaufbereitung erhaltenen Kaffeebohnen haftet noch das Pergamenthäutchen an, so dass diese Kaffeebohnen im trockenen Zustand getrockneter Pergamentkaffee genannt werden.

Nach der eigentlichen Aufbereitung werden die getrockneten Kaffeebohnen (getrockneter Pergamentkaffee) bzw. getrockneten Kaffeebeeren (bei einer Trockenaufbereitung) einer Nachbehandlung unterzogen, um auch das Pergamenthäutchen und soweit wie möglich das Silberhäutchen des getrockneten Pergamentkaffees bzw. Fruchthaut, Fruchtfleisch, das Pergamenthäutchen bzw. Silberhäutchen getrockneter Kaffeebeeren zu entfernen und die Kaffeebohnen zu sortieren.

Zur Nachbehandlung wird eine weitere Reinigung durchgeführt, bevor in einem Schälschritt die Pergamenthaut bzw. das Silberhäutchen und ggf. auch Fruchthaut und Fruchtfleisch entfernt werden.

Abschließend findet eine Sortierung nach Größe und ggf. Dichte bzw. Farbe der dann ungerösteten gründen Kaffeebohnen statt. Vor dem Konsum werden die grünen Bohnen in der Regel noch geröstet und gemahlen.

Grüne Kaffeebohnen enthalten einen Asparaginsäureanteil, der im Durchschnitt bei 0,5 g/kg liegt, sowie etwa 60 g/kg reduzierende Zucker. Diese hohen Anteile führen dazu, dass während der Röstung Acrylamid entsteht. Der durchschnittliche Acrylamidgehalt herkömmlich gerösteter Kaffeebohnen liegt bei 250-350 µg/kg.

Um Kaffeebohnen, insbesondere geröstete Kaffeebohnen mit weniger Acrylamid bereitzustellen, ist erfindungsgemäß ein Verfahren zum Behandeln von Kaffeebohnen vorgesehen, das die Schritte des Behandelns der Kaffeebohnen mit einem elektrischen Feld und des In-Kontakt-Bringens der Kaffeebohnen mit einem Reagens, das den Gehalt von reduzierenden Zuckern und/oder Asparagin in der ungerösteten Bohne reduziert, umfasst.

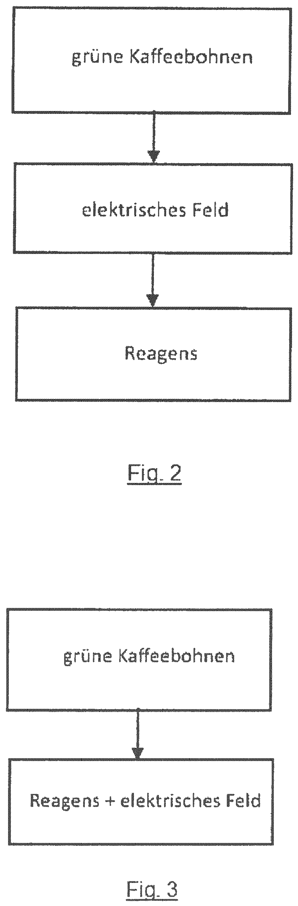

Beispielhafte Ausführungsformen dieses erfindungsgemäßen Verfahrens sind in den Fig. 2 bis 3 dargestellt und werden nachfolgend anhand beispielhafter Ausführungsformen näher erläutert.

Gemäß einer ersten Ausführungsform, die in Fig. 2 gezeigt ist, werden ungeröstete Kaffeebohnen, nämlich grüne Kaffeebohnen behandelt. Die grünen Kaffeebohnen werden zunächst mit einem elektrischen Feld behandelt. Dazu können die grünen Bohnen entweder mit einer geringen Menge Wasser befeuchtet oder in Wasser eingeweicht werden, um den Effekt der Behandlung mit dem elektrischen Feld zu verstärken. Die Behandlung mit einem elektrischen Feld macht die Kaffeebohnen überraschenderweise zugänglicher und empfindlicher für das Reagens, das den Gehalt von reduzierenden Zuckern und/oder Asparagin reduziert. Bevorzugt wird beim Behandeln ein gepulstes elektrisches Feld angelegt, das einen Zellaufschluss bewirkt, wobei die Kaffeebohnen vorzugsweise dabei nicht thermisch aufgeschlossen werden. Beispielsweise können die Kaffeebohnen mit wenigstens 10 elektrischen Pulsen, vorzugsweise 10 bis 200 elektrischen Pulsen, und besonders bevorzugt 30 bis 50 elektrischen Pulsen behandelt werden. Das angelegte elektrische Feld kann von 0,1 kV/cm bis 10 kV/cm, vorzugsweise von 0,5 bis 2 kV/cm betragen. Beim Behandeln mit einem elektrischen Feld wird vorzugsweise ein Energieeintrag von wenigstens 0,1 kJ/kg, vorzugsweise von 3 bis 8 kJ/kg in die Kaffeebohnen vorgenommen. Die Behandlung mit dem elektrischen Feld modifiziert die Textur und Struktur der Kaffeebohnen und ermöglicht ein besseres Eindringen des Reagens, das das den Gehalt von reduzierenden Zuckern und/oder Asparagin reduziert, bzw. erleichtert die Extraktion von Asparagin und/oder reduzierenden Zuckern aus den Kaffeebohnen.

Im beispielhaften Verfahren der Fig. 2 findet das In-Kontakt-Bringen der Kaffeebohnen mit einem Reagens, das das den Gehalt von reduzierenden Zuckern und/oder Asparagin reduziert, nach dem Schritt des Behandelns mit einem elektrischen Feld statt. Dazu können die Kaffeebohnen oberflächlich mit dem Reagens angefeuchtet oder im Reagens eingeweicht werden.

Als Reagenz kommen insbesondere Reagenzien in Frage, Asparagin in der Kaffeebohne spalten oder in einen Stoff umsetzen, der zu keiner Acrylamidbildung führt. Das Reagenz kann auch mit einem reduzierenden Zucker, beispielsweise Glukose, Fruktose, Galaktose, Maltose, Laktose reagieren und den reduzierenden Zucker in einen Stoff umsetzen, der im Röstprozess zu keiner Acrylamidbildung führt. Ferner kann das Reagenz ein Extraktionsmittel sein, welches Asparagin und/oder reduzierende Zucker aus den Kaffeebohnen herauszieht, also extrahiert. Dies kann beispielsweise eine wässrige Lösung sein. Das Reagenz, welches mit den ungerösteten Kaffeebohnen in Kontakt gebracht wird, kann eine Asparaginase und/oder eine Oxidoreduktase, beispielsweise eine Oxidase oder Dehydrogenase umfassen. Beispiele für Oxidorekuktasen sind Glukose-Oxidase, Pyranose-Oxidase, Hexose-Oxidase, Galaktose-Oxidase, Glukose-Dehydrogenase, Galaktose-Dehydrogenase, D-Aldohexose-Dehydrogenase, Fruktose-Dehydrogenase, Aldehyd-Dehydrogenase, oder eine Glukose-Fruktose-Oxidoreduktase. Das Reagenz kann auch ein Mikroorganismus sein, der ein mit Asparagin und/oder einem reduzierenden Zucker reagierendes Enzym exprimiert, oder ein Lysat des Mikroorganismus. Der Mikroorganismus kann beispielsweise ausgewählt sein aus der Gruppe umfassend *Aspergillus sp., Aspergillus oryzae, Aspergillus nidulans, Aspergillus niger, Aspergillus fumigatus, Erwinia sp., Erwinia chrysantemii, Saccharomyces sp., Saccharomyces cerevisae, Candida sp., Candida utilis, Escherichia sp., Escherichia coli, Fusarium sp., Fusarium graminearum, Penecilium sp., Penecilium citrinum, Iridophycus, Chondrus, Euthora, Iridophycus flaccidum, Chondrus crispus und Euthora christata, Basidiumycete, Peniophora, Aphyllophorales, Phanerochaete, Polyporus, Bierkandera, Phlebiopsis, Basidiumycete fungi, Peniophora gigantean, Phanerochaete chrysosporium, Polyporus pinsitus, Bierkandera adusta, Phlebiopsis gigantean, Microdochium* und *Acremonium, Microdochium nivale, Acremonium strictum, Acremonium fusidioidis* oder *Acremonium potronii.*

Beim Schritt des In-Kontakt-Bringens des Reagens können die Bohnen gemäß dem Verfahren der Fig. 2 beispielsweise mit einer Asparaginase-Lösung angefeuchtet und vorzugsweise mindestens 12 Stunden gelagert werden, bevor sie erneut getrocknet und anschließend geröstet werden.

In Fig. 3 ist eine weitere beispielhafte Ausführungsform eines erfindungsgemäßen Verfahrens gezeigt.

Das beispielhafte Verfahren der Fig. 3 unterscheidet sich vom beispielhaften Verfahren der Fig. 2 dadurch, dass der Schritt des Behandelns der Kaffeebohnen mit einem elektrischen Feld und der Schritt des In-Kontakt-Bringens der Kaffeebohnen mit einem Reagens, das das den Gehalt von reduzierenden Zuckern und/oder Asparagin reduziert, gleichzeitig stattfinden.

Dazu können grüne Kaffeebohnen mit dem Reagens angefeuchtet, bzw. im Reagens eingeweicht werden, bevor sie in Gegenwart des Reagens einem elektrischen Feld, beispielsweise einem gepulsten elektrischen Feld ausgesetzt werden. Das elektrische Feld reduziert überraschenderweise besonders stark den Gehalt der in den Kaffeebohnen enthaltenen Asparaginsäure und/oder reduzierenden Zuckern. Anschließend können die Bohnen vorzugsweise gelagert und abschließend getrocknet bzw. geröstet werden.

Bei den beispielhaften Verfahren der Fig. 2 und 3 werden die Kaffeebohnen mit einem elektrischen Feld behandelt, nachdem die Kaffeebohnen getrocknet wurden, in den Beispielen im Stadium der grünen Kaffeebohnen.

Eine andere Ausführungsform des erfindungsgemäßen Verfahrens kann vorsehen, dass die Kaffeebohnen einem elektrischen Feld ausgesetzt werden, bevor sie getrocknet werden. Ein solches beispielhaftes Verfahren ist in Fig. 3, beispielhaft für nassaufbereitete Kaffeebohnen gezeigt.

In dem beispielhaften Verfahren werden die geemteten Kaffeebeeren (auch Kaffeekirschen genannt) sofort nach der Ernte mit einem elektrischen Feld behandelt. Die Behandlung kann bereits im Ernteland der Kaffeebohnen stattfinden. Es ist zu erwarten, dass bei einer Behandlung mit einem elektrischen Feld in einem recht frühen Stadium insbesondere eine Behandlung erfolgversprechend ist, die zu einer irreversiblen Elektroporation der Kaffeebohnen führt. Dabei wird die Zellmembran der Zellen in den Kaffeebohnen dauerhaft in ihrer Semipermeabilität so beeinflusst, dass ein Reagens, das das den Gehalt von reduzierenden Zuckern und/oder Asparagin reduziert, besser und effektiver in die Zellen eindringt und mit Asparagin und/oder einem reduzierenden Zucker in der Kaffeebohne reagieren kann.

Die Nassaufbereitung, die in den beispielhaften Verfahren der Figur gezeigt ist, entspricht der allgemeinen Nassaufbereitung der Fig. 1. Der einzige Unterschied zur Nassaufbereitung der Fig. 1 ist, dass zwischen dem Schritt des Waschens, bei welchem die Schleimstoffe entfernt werden, und dem Trocknen, der Schritt des In-Kontakt-Bringens der Kaffeebohnen mit dem Reagens, das den Gehalt von reduzierenden Zuckern und/oder Asparagin reduziert, erfolgt. Die Zugabe des Reagens an dieser Stelle ist insofern vorteilhaft, als die Kaffeebohnen bereits von der Fruchthaut, den Fruchtfleischresten (Pulpe) sowie den Schleimstoffen befreit wurden, was eine besonders gute Durchdringung und Verteilung des Reagens in den Kaffeebohnen gewährleistet.

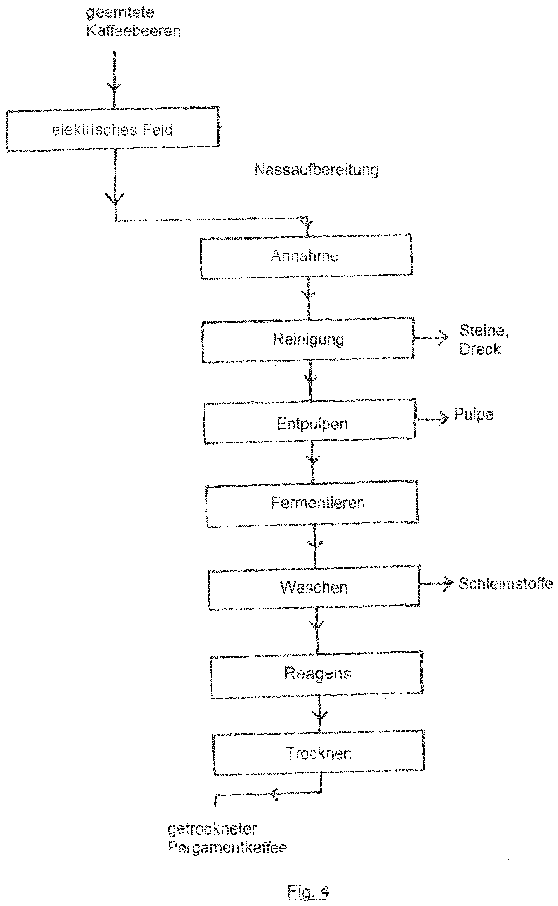

Selbstverständlich könnte das in Fig. 4 gezeigte beispielhafte Verfahren auch dahingehend modifiziert werden, dass der Schritt des Behandelns mit einem elektrischen Feld nicht an den geernteten Kaffeebeeren, sondern in Fig. 4 zwischen dem Schritt des Waschens und der Zugabe des Reagens erfolgt.

Auch weitere Modifikationen sind denkbar, beispielsweise, dass das Reagens der Waschlösung zur Entfernung der Schleimstoffe beigegeben und/oder der Fermentationsbehälter mit einem Elektroporator versehen ist, so dass die Behandlung der Kaffeebohnen mit einem elektrischen Feld während des Fermentierens stattfindet.

## Patentansprüche

1. Verfahren zum Behandeln von Kaffeebohnen, insbesondere zum Bereitstellen von Kaffeebohnen, die im Vergleich zu unbehandelten Kaffeebohnen nach der Röstung weniger Acrylamid aufweisen, umfassend die folgenden Schritte:
- Behandeln der ungerösteten Kaffeebohnen mit einem elektrischen Feld, und
- In-Kontakt-Bringen der ungerösteten Kaffeebohnen mit einem Reagenz, das den Gehalt von reduzierendem Zucker und/oder Asparagin in der ungerösteten Bohne reduziert.

2. Verfahren nach Anspruch 1, wobei das Reagenz (i) ein Enzym umfasst, das Asparagin und/oder einen reduzierenden Zucker chemisch umsetzt, (ii) einen Mikroorganismus umfasst, der ein Enzym exprimiert, welches Asparagin und/oder reduzierenden Zucker chemisch umsetzt, (iii) ein Lysat des Mikroorganismus umfasst, und/oder (iv) ein Extraktionsmittel zum Herauslösen von Asparagin und/oder reduzierenden Zuckern aus der ungerösteten Kaffeebohne umfasst.

3. Verfahren nach Anspruch 2, wobei der Mikroorganismus ausgewählt ist aus der Gruppe umfassend: *Aspergillus sp., Aspergillus oryzae, Aspergillus nidulans, Aspergillus niger, Aspergillus fumigatus, Erwinia sp., Erwinia chrysantemii, Saccharomyzes sp., Saccharomyzes cerevisae, Candida sp., Candida utilis, Escherichia sp., Escherichia coli, Fusarium sp., Fusarium graminearum, Penecilium sp., Penecilium citrinum, Iridophycus, Chondrus, Euthora, Iridophycus flaccidum, Chondrus crispus, Euthora christata, Basidiumycete, Peniophora, Aphyllophorales, Phanerochaete, Polyporus, Bierkandera, Phlebiopsis, Basidiumycete fungi, Peniophora gigantean, Phanerochaete chrysosporium, Polyporus pinsitus, Bierkandera adusta* und *Phlebiopsis gigantean, Microdochium Acremonium, Microdochium nivale, Acremonium strictum, Acremonium fusidioidis* und *Acremonium potronii.*

4. Verfahren nach einem der Ansprüche 1 bis 3, wobei das Reagenz eine Asparaginase (EC 3.5.1.1) und/oder eine Oxidoreduktase, vorzugsweise eine Oxidase oder Dehydrogenase umfasst.

5. Verfahren nach einem der Ansprüche 1 bis 4, wobei die behandelten ungerösteten Bohnen grüne Bohnen oder die Steinkerne von ungetrockneten Kaffeebeeren sind.

6. Verfahren nach einem der Ansprüche 1 bis 5, wobei der Schritt des In-Kontakt-Bringens ein Einweichen oder ein oberflächliches Anfeuchten der Kaffeebohnen umfasst.

7. Verfahren nach einem der Ansprüche 1 bis 6, wobei beim Behandeln mit einem elektrischen Feld ein Energieeintrag von wenigstens 0,1 kJ/kg, vorzugsweise von 3 bis 8 kJ/kg in die Kaffeebohnen erfolgt.

8. Verfahren nach einem der Ansprüche 1 bis 7, wobei ein elektrisches Feld von 0,1 kV/cm bis 10 kV/cm, vorzugsweise von 0,5 kV/cm bis 2 kV/cm angelegt wird.

9. Verfahren nach einem der Ansprüche 1 bis 8, wobei die Kaffeebohne mit wenigstens 10 elektrischen Pulsen, vorzugsweisen 10 bis 200 elektrischen Pulsen, besonders bevorzugt 30 bis 50 elektrischen Pulsen behandelt wird.

10. Verfahren nach einem der Ansprüche 1 bis 9, wobei beim Behandeln ein gepulstes elektrisches Feld angelegt wird, das einen Zellaufschluss bewirkt, wobei die Kaffeebohnen vorzugsweise nicht-thermisch aufgeschlossen werden.

11. Verfahren nach einem der Ansprüche 1 bis 10, wobei die Kaffeebohnen mit einem elektrischen Feld behandelt werden, bevor oder während die Kaffeebohnen mit dem Reagens in Kontakt gebracht werden.

12. Verfahren nach einem der Ansprüche 1 bis 11, wobei die Kaffeebohnen mit einem elektrischen Feld behandelt werden, (a) nachdem die Kaffeebohnen getrocknet wurden, oder (b) bevor die Kaffeebohnen getrocknet wurden.

13. Verfahren nach einem der Ansprüche 1 bis 12, wobei die Kaffeebohnen mit einem Reagens in Kontakt gebracht werden, (a) nachdem die Pulpe von den Kaffeebohnen entfernt wurde, (b) nachdem die Kaffeebohnen fermentiert und gewaschen wurden, und/oder (c) nachdem die Kaffeebohnen getrocknet und geschält wurden.

14. Kaffeebohne, die gemäß dem Verfahren nach einem der Ansprüche 1 bis 13 hergestellt wurde.

15. Kaffeebohne nach Anspruch 14, wobei die Kaffeebohne eine einen Gehalt an reduzierendem Zucker von weniger als 40 g/kg und/oder einem Asparagingehalt von weniger als 0,4 g/kg aufweist, oder wobei die Kaffeebohne einen Acrylamidgehalt von weniger als 200 µg/kg, vorzugsweise von weniger als 100 µg/kg aufweist.
